# EUROPÄISCHE PATENTSCHRIFT

(11) **EP 2 632 775 B1**
(45) Veröffentlichungstag und Bekanntmachung des Hinweises auf die Patenterteilung: **15.10.2014**
(21) Anmeldenummer: 11754985.7
(22) Anmeldetag: 04.08.2011
(51) Int. Cl.: B60R 21/264, C06D 5/06

(54) **FESTTREIBSTOFFKÖRPER, GASGENERATOR, MODUL MIT GASGENERATOR UND PYROTECHNISCHE ANTRIEBSEINHEIT**
SOLID FUEL BODY, GAS GENERATOR, MODULE HAVING A GAS GENERATOR, AND PYROTECHNIC DRIVE UNIT
CORPS DE COMBUSTIBLE SOLIDE, GÉNÉRATEUR DE GAZ, MODULE À GÉNÉRATEUR DE GAZ ET UNITÉ D'ENTRAÎNEMENT PYROTECHNIQUE

(30) Priorität: 29.10.2010 DE 102010049765
(43) Veröffentlichungstag der Anmeldung: 04.09.2013
(73) Patentinhaber: TRW Airbag Systems GmbH, 84544 Aschau am Inn (DE)
(72) Erfinder: NIEHAUS, Michael, 76297 Stutensee (DE); LORBEER, Bernd, 18119 Rostock (DE); BERG, Torsten, 18292 Krakow am See (DE)
(74) Vertreter: Mehnert, Bernhard
(86) Internationale Anmeldenummer: PCT/EP2011/003916
(87) Internationale Veröffentlichungsnummer: WO 2012/055450

(56) Entgegenhaltungen:
- DE-A1-102006 044 899
- US-A- 5 101 730
- US-A- 5 578 787
- US-A- 6 053 110

## Beschreibung

Die Erfindung betrifft einen Festtreibstoffkörper nach dem Oberbegriff des Anspruchs 1. Die Erfindung betrifft ferner einen Gasgenerator mit zumindest einer Brennkammer und ein Modul mit einem solchen Gasgenerator. Weiterhin betrifft die Erfindung eine pyrotechnische Antriebseinheit mit einem Gehäuse, mit einem in dem Gehäuse bewegbaren Kolben.

Solche Festtreibstoffkörper sind beispielsweise aus der US 5,101,730 A, der US 5,578,878 A oder der gattungsbildenden US 6,053,110, bekannt.

Aus dem Stand der Technik ist es bekannt, Festtreibstofftabletten für Gasgeneratoren in zylindrischer Form aus einem pulverförmigen oder granulatförmigen Festtreibstoff zu pressen. Derartige Festtreibstofftabletten ermöglichen jedoch nur ein limitiertes Verhältnis zwischen Oberfläche und Volumen der Tablette. Um ein schnelles Entzünden und Abbrennen des Treibstoffs im Gasgenerator zu ermöglichen, ist ein möglichst großes Verhältnis von Oberfläche zu Volumen des Festtreibstoffs wünschenswert.

Ferner ist es bekannt, Festtreibstoff in Form eines Granulats mit verschiedenen Korngrößen für Gasgeneratoren zu verwenden. Bei einem derartigen Granulat kann aber kein definiertes Oberfläche/Volumenverhältnis bestimmt werden, wodurch sich eine gewisse Streuung in der Leistungscharakteristik der Gasgeneratoren ergibt. Die Oberflächenstruktur eines derartigen Granulats ist im Allgemeinen undefiniert, und derartiges Granulat kann einen zusätzlichen Anteil an Granulatbruch oder Granulatstaub aufweisen, wodurch sich ebenfalls eine gewisse Streuung in der Leistungscharakteristik der Gasgeneratoren ergeben könnte.

Aufgabe der Erfindung ist es, einen Festtreibstoffkörper zu schaffen, welcher ein definiertes und erhöhtes Oberfläche/Volumenverhältnis aufweist, sowie einen Gasgenerator, dessen Kennfeld einen sehr kurzen Onset und/oder eine anfangs große Gaserzeugung bei geringer Streuung der Leistungscharakteristik vorsieht. Weiterhin ist es Aufgabe der Erfindung, ein Modul mit einem solchen Gasgenerator bereitzustellen. Eine weitere Aufgabe der Erfindung ist es, eine pyrotechnische Antriebseinheit mit einem Gehäuse, einem in dem Gehäuse bewegbaren Kolben und einer Anzündbaugruppe, welche eine Anzündvorrichtung und eine Mehrzahl von solchen Festtreibstoffkörpern aufweist, bereitzustellen.

Die Aufgabe der Erfindung bezüglich des Festtreibstoffkörpers wird durch einen gattungsgemäßen Festtreibstoffkörper gelöst, wobei der Festtreibstoffkörper auf zumindest einer seiner Seiten zumindest eine Vertiefung aufweist. Auf diese Weise wird das Verhältnis von Oberfläche zu Volumen vergrößert, wodurch ein schnelles Entzünden und Abbrennen ermöglicht wird. Da eine definierte Oberflächenstruktur des Presskörpers vorgegeben ist, liegt ein definiertes Oberfläche/Volumenverhältnis der Festtreibstoffkörper vor, wodurch eine geringe Streuung der Leistungscharakteristik von Gasgeneratoren oder Aktuatoren mit derartigen Festtreibstoffkörpern erreicht werden kann.

Gemäß der Erfindung weist die Vertiefung einen ersten Krümmungsradius in ihrem zentralen Bereich und einen zweiten Krümmungsradius in ihrem Randbereich auf.

Die Festtreibstoffkörper eignen sich insbesondere als Treibstoff für Gasgeneratoren oder Aktuatoren mit Kennfeldern, die einen sehr kurzen Onset und/oder eine anfangs große Gaserzeugung vorsehen.

Beispielsweise ist die Vertiefung konkav und/oder weist einen runden, vorzugsweise kreisförmigen Querschnitt auf. Die Vertiefung ist gemäß einer Ausführungsform umgekehrt domförmig. Dies ermöglicht insbesondere eine einfache Bauweise der Pressform des Presskörpers.

Ein vorteilhaftes Oberfläche/Volumenverhältnis lässt sich erreichen, indem die konkave Vertiefung einen Durchmesser hat, welcher zwischen 50% und 100%, vorzugsweise zwischen 80% und 98%, des Durchmessers des Festtreibstoffkörpers und/oder in dem die maximale Tiefe der konkaven Vertiefung zwischen 20% und 90%, vorzugsweise zwischen 30% und 50% der Höhe des Festtreibstoffkörpers beträgt.

Der Festtreibstoffkörper kann tablettenförmig sein und/oder eine im Wesentlichen zylindrische Grundform ausweisen.

Eine hohe mechanische Stabilität des Festtreibstoffkörpers kann erreicht werden, indem eine zentrale Vertiefung in einer oder beiden Stirnseiten vorgesehen ist, insbesondere eine einzige Vertiefung. Es ist auch möglich, dass eine Mehrzahl von Vertiefungen vorgesehen ist.

Beispielsweise sind mehrere Vertiefungen an gegenüberliegenden Seiten, vorzugsweise an allen Seiten, insbesondere an den Stirnseiten, des Festtreibstoffkörpers angeordnet und/oder die Mehrzahl von Vertiefungen, welche vorzugsweise einen Durchmesser kleiner als 10% des Durchmessers des Festtreibstoffkörpers aufweisen, sind gleichmäßig oder in bestimmten Mustern verteilt auf zumindest einer Seite des Festtreibstoffkörpers angeordnet.

Beim Formen des Presskörpers kann die Haftung des Festtreibstoffkörpers in der Pressform reduziert werden, indem die Vertiefungen konkav gewölbt ausgebildet sind.

Die beiden Krümmungsradien weisen vorzugsweise unterschiedliche Vorzeichen haben.

Es ist möglich, dass die wenigstens eine Vertiefung die Oberfläche derjenigen Seite des Festtreibstoffkörpers, an welcher sie vorgesehen ist, um wenigstens 10%, insbesondere wenigstens 25%, weiter insbesondere um wenigstens 35%, im Vergleich zu der Oberfläche einer (theoretisch) vertiefungsfrei ausgebildeten Seite erhöht und/oder dass die wenigstens eine Vertiefung wenigstens 20% der Oberfläche der Seite, an welcher sie vorgesehen ist, bildet. Dabei soll die Bezeichnung "eine (theoretisch) vertiefungsfrei ausgebildeten Seite" bedeuten, dass zusätzlich zu der wenigstens einen Vertiefung keine weitere Vertiefung an einer entsprechenden Seite des Festtreibstoffkörpers vorgesehen sein muss, dass eine solche jedoch durchaus vorgesehen sein kann.

Die konkave Vertiefung der Festtreibstoffkörper kann eine Tiefe von 1,2 mm bis 5,4 mm, vorzugsweise von 1,8 mm bis 3,0 mm aufweisen. Weiterhin kann die konkave Vertiefung der Festtreibstoffkörper einen Durchmesser von 3,0 mm bis 6,0 mm, vorzugsweise von 4,8 mm bis 5,8 mm aufweisen.

In einer weiteren Ausführungsform der Erfindung, die separat von den zuvor beschriebenen Ausführungsformen, aber auch kombiniert mit jeder dieser Ausführungsformen ausgebildet sein kann, weist die Tablette bzw. der Tablettenrohling auf zumindest einer seiner Seiten (vorzugsweise Basis oder Deckseite, aber auch Mantelseite) zumindest eine konkave Vertiefung, z.B. eine Delle, insbesondere von rundem Querschnitt auf. Hierdurch wird die Oberfläche der Tablette vergrößert, was das Abbrandverhalten weiter beschleunigt.

Die Aufgabe der Erfindung bezüglich des Gasgenerators wird durch einen erfindungsgemäßen Gasgenerator gelöst. Dieser umfasst zumindest eine Brennkammer, welche in nicht aktiviertem Zustand des Gasgenerators mit einer Mehrzahl von oben beschriebenen Festtreibstoffkörpern gefüllt ist und wobei vorzugsweise alle, oder im Wesentlichen alle Festtreibstoffkörper im Wesentlichen gleich ausgebildet sind. Dies ermöglicht eine Ausführung des Gasgenerators mit einem Kennfeld, welches einen sehr kurzen Onset und/oder eine anfangs große Gaserzeugung vorsieht. Da ein definiertes Oberflächen/Volumenverhältnis der Festtreibstoffkörper vorliegt, ist die Streuung der Leistungscharakteristik des Gasgenerators gering.

Der Gasgenerator kann auch zumindest eine Brennkammer umfassen, wobei die Brennkammer im nicht aktivierten Zustand des Gasgenerators mit einer Mehrzahl von oben beschriebenen Festtreibstoffkörpern gefüllt ist, wobei zumindest zwei unterschiedliche Formvarianten von Festtreibstoffkörpern schichtartig in der Brennkammer angeordnet sind. Durch eine derartige Schichtung kann beispielsweise ein in mehrere Stufen untergliederter Onset in dem Kennfeld des Gasgenerators realisiert werden, so dass der Onset zeitlich weiter stufenartig differenziert ausgestaltet werden kann.

Die Aufgabe der Erfindung bezüglich des Moduls wird durch ein erfindungsgemäßes Modul gelöst, welches einen derartigen Gasgenerator, einen vom Gasgenerator aufblasbaren Gassack und eine Befestigungseinrichtung zur Anbringung des Moduls, insbesondere im Innenbereich eines Fahrzeugs, umfasst.

Die Aufgabe der Erfindung bezüglich der pyrotechnische Antriebseinheit wird durch eine erfindungsgemäße pyrotechnische Antriebseinheit gelöst, welche ein Gehäuse, ein in dem Gehäuse bewegbaren Kolben und ein Anzündbaugruppe, welche eine Anzündvorrichtung und eine Mehrzahl von Festtreibstoffkörpern, die gemäß zumindest einem der Patentansprüche 1 bis 10 ausgebildet sind, umfasst.

Weitere Merkmale und Vorteile der Erfindung ergeben sich aus der nachfolgenden Beschreibung und den Zeichnungen auf die Bezug genommen wird. In den Zeichnungen zeigen:
- Figur 1 eine perspektivische Ansicht eines Festtreibstoffkörpers gemäß einer ersten Ausführungsform der Erfindung;
- Figur 2 eine Schnittansicht des Festtreibstoffkörper gemäß Figur 1;
- Figur 3 eine Schnittansicht eines Festtreibstoffkörpers gemäß einer zweiten Ausführungsform der Erfindung;
- Figur 4 eine Schnittansicht eines Festtreibstoffkörpers gemäß einer dritten Ausführungsform der Erfindung;
- Figur 5 eine Schnittansicht eines Festtreibstoffkörper gemäß einer vierten Ausführungsform der Erfindung;
- Figur 6 einen erfindungsgemäßen Gasgenerator und ein erfindungsgemäßes Modul.
- Figur 7 eine erfindungsgemäße pyrotechnische Antriebseinheit.

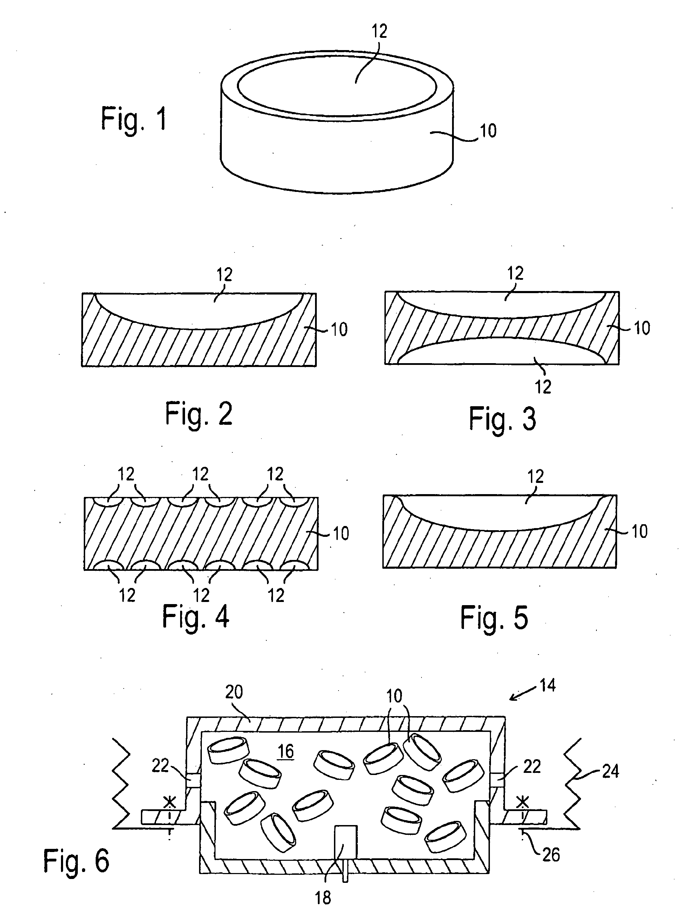

Figur 1 zeigt eine perspektivische Ansicht einer ersten Ausführungsform eines Festtreibstoffkörpers 10 in Form eines Presskörpers aus einem pulver- und/oder granulatförmigen Festtreibstoff.

Der Festtreibstoffkörper 10 ist als eine im Wesentlichen zylinderförmige Tablette ausgebildet, wobei eine einzige Vertiefung 12 vorgesehen ist, die zentral an der oberen Stirnseite angeordnet ist.

Figur 2 zeigt den Festtreibstoffkörper 10 in einer Schnittansicht. Der Durchmesser der Vertiefung 12 beträgt circa 90% des Durchmessers des Festtreibstoffkörpers. Die maximale Tiefe der Vertiefung 12 im zentralen Bereich der Vertiefung 12 beträgt circa 50% der Höhe des Festtreibstoffkörpers 10.

Aufgrund der Geometrie der Vertiefung 12 erhöht sich die Oberfläche des Festtreibstoffkörpers 10, während gleichzeitig das Volumen gegenüber einem Festtreibstoffkörpers ohne entsprechende Vertiefung reduziert wird. Auf diese Weise wird das Oberflächen/Volumenverhältnis vergrößert, wodurch der zeitliche Verlauf des Abbrennens des Festtreibstoffkörpers verändert und ein schnelleres Entzünden und Abbrennen des Festtreibstoffes ermöglicht wird.

Eine zweite Ausführungsform eines Festtreibstoffkörpers 10 ist in Figur 3 gezeigt. In dieser Ausführungsform ist jeweils eine Vertiefung 12 auf den beiden Stirnseiten des Festtreibstoffkörpers 10 angeordnet. Die Vertiefungen 12 sind analog zur ersten Ausführungsform ausgebildet, wobei jedoch die maximale Tiefe im Zentrum der Vertiefung 12 jeweils circa 35% der Höhe des Festtreibstoffkörpers beträgt. In dieser Ausführungsform ist das Oberflächen/Volumenverhältnis gegenüber der ersten Ausführungsform weiter erhöht.

Eine dritte Ausführungsform ist in Figur 4 dargestellt. In dieser Figur ist eine Mehrzahl von Vertiefungen 12 vorgesehen, welche in einem regelmäßigen Muster verteilt auf beiden Stirnseiten des Festtreibstoffkörpers 10 angeordnet ist. Der Durchmesser der einzelnen Vertiefungen 12 ist kleiner als 10% des Durchmessers des Festtreibstoffkörpers 10. Beispielsweise sind Vertiefungen in einem hexagonalen Muster angeordnet, analog zu Dimpeln eines Golfballs.

Figur 5 zeigt eine vierte Ausführungsform mit einer zentralen Vertiefung 12 auf der oberen Stirnseite des Festtreibstoffkörpers 10, wobei die Vertiefung 12 einen ersten Krümmungsradius in ihrem zentralen Bereich und einen zweiten Krümmungsradius in ihrem Randbereich aufweist, wobei die beiden Krümmungsradien unterschiedliche Vorzeichen haben.

Die erste, zweite und vierte Ausführungsform ist jeweils rotationssymmetrisch ausgebildet.

Es sind aber auch andere Formen von Festtreibstoffkörpern möglich, die von der in den Ausführungsbeispielen gezeigten Grundform einer kreiszylindrischen Tablette abweichen. Es sei angemerkt, dass der Begriff "zylindrisch" im Sinne der Erfindung nicht auf einen Kreiszylinder beschränkt ist, sondern jede geeignete, in sich geschlossene (ringförmige) Kontur einer Basisfläche eines Zylinders definieren kann. Es können insbesondere auch Vertiefungen auf den Flächen des Zylindermantels und vorzugsweise auf allen Flächen des Festtreibstoffkörpers vorgesehen sein, z. B. eine umlaufende Ringnut oder axiale Vertiefungen, die zwischen sich Rippen bilden, was das leichte Entformen des Presskörpers erlaubt.

Die Vertiefungen sind gewölbt ausgebildet, wobei ein Ausstoßen der Festtreibstoffkörper aus einer Pressform erleichtert wird, wenn die Ausstoßrichtung des Festtreibstoffkörpers 10 aus seiner Pressform eine Tangentialkomponente zur Oberfläche der Pressform im Bereich der Vertiefung 12 aufweist.

Die Festtreibstoffkörper 10 haben eine solche Geometrie, dass ihre Oberfläche eine um wenigstens 10%, insbesondere wenigstens 25% und vorzugsweise wenigstens 35% gegenüber der Oberfläche eines vertiefungsfrei ausgebildeten Festtreibstoffkörpers erhöht ist. Die Vertiefungen 12 bilden mehr als 20% der Oberfläche der Seite, an der sie vorgesehen sind.

In den gezeigten Ausführungen sind die Festtreibstoffkörper formstabil ausgebildet sind, um gewissen Belastungen widerstehen können ohne zu brechen.

Es ist alternativ möglich, dass zumindest eine Vertiefung als Sollbruchstelle ausgebildet ist, an der ein vorzugsweises Brechen des Festtreibstoffkörpers vorgesehen ist, wodurch eine im Wesentlichen definierte Bruchstelle erzeugt werden kann, die dann nach dem Brechen die Oberfläche noch einmal erhöht. Denkbar sind insbesondere auch je eine Vertiefung im Bereich zwischen Sollbruchstelle und Rand der Tablette, auch auf der der Sollbruchstelle gegenüberliegenden Seite der Tablette.

Figur 6 zeigt einen Gasgenerator 14 als Teil eines Moduls. Der Gasgenerator 14 umfasst eine Brennkammer 16, in der eine Anzündervorrichtung 18 und eine Mehrzahl von Festtreibstoffkörpern vorgesehen sind. Die Brennkammer 16 wird von einem Gehäuse 20 des Gasgenerators 14 umgeben, in dem mehrere Gasaustrittsöffnungen 22 vorgesehen sind.

In der gezeigten Ausführungsform sind alle Festtreibstoffkörper 10 gleich ausgebildet, d. h. mit identischer Geometrie.

Alternativ ist es jedoch denkbar, dass eine definierte Mischung von verschiedenen Festtreibstoffkörpern 10 in der Brennkammer 16 vorgesehen ist, entweder als eine im Wesentlichen homogenen Mischung oder in Form einer Schichtung, bei der zumindest zwei Formvarianten von Festtreibstoffkörpern 10 schichtartig in der Brennkammer 16 angeordnet sind, wobei derartige Schichten von verschiedenen Festtreibstoffkörpern 10 direkt aneinander angrenzen können oder auch durch ein separates Bauteil, wie zum Beispiel eine Vlieseinlage, gegen einander abgegrenzt werden können.

Bei Zünden des Gasgenerators 14 durch die Anzündervorrichtung 18 erfolgt aufgrund des hohen Flächen/Volumenverhältnisses der Festtreibstoffkörper 10 ein rasches Entzünden und Abbrennen des Festtreibstoffs, wodurch zu Beginn des Zündvorgangs eine große Gaserzeugung ermöglicht wird. Dies ermöglicht einen sehr kurzen Onset des Gasgenerators.

Der Gasgenerator 14 ist in einem Modul eines Fahrzeuginsassen-Rückhaltesystems vorgesehen mit einem vom Gasgenerator 14 aufblasbaren Gassack 24 und einer Befestigungseinrichtung 26 zur Anbringung des Moduls in den Innenbereich eines Fahrzeugs.

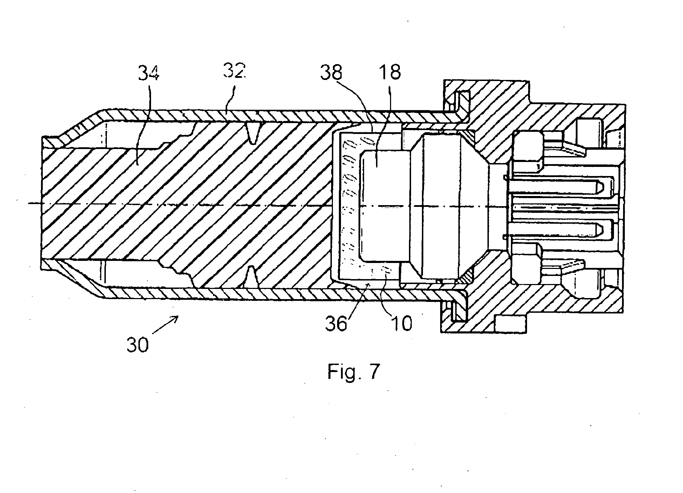

Figur 7 zeigt eine pyrotechnische Antriebseinheit (30) mit einem Gehäuse (32), einem in dem Gehäuse (32) bewegbaren Kolben (34) und eine Anzündbaugruppe (36), welche eine Anzündvorrichtung (18) und eine Mehrzahl von oben beschriebenen Festtreibstoffkörpern (10) umfasst. Im Falle einer Auslösung der pyrotechnischen Antriebseinheit (30), wird die Anzündervorrichtung (18), die beispielsweise mit einem nicht dargestellten Steuergerät verbunden sein kann, aktiviert. Dadurch wird eine im Inneren der Anzündervorrichtung (18) nicht dargestellte pyrotechnische Ladung angezündet, welche Druck in Form von heißem Gas und/oder heißen Partikeln erzeugt, wodurch die Anzündervorrichtung (18) stirnseitig geöffnet wird. Durch das aus der Anzündervorrichtung (18) ausströmende heiße Gas und/oder heiße Partikel werden die Festtreibstoffkörper (10) angezündet, welche daraufhin abbrennen und ihrerseits ebenfalls Druck erzeugen. Der durch den Druck beaufschlagte Kolben (34) wird in dem Gehäuse (32) bewegt und zumindest teilweise aus dem Gehäuse (32) hinausgeschoben. Es wird also ein gewisser Hub des Kolbens (34) erzeugt, der einen Antrieb für verschiedene Anwendungen darstellt. So ist es beispielsweise möglich, dass eine solche pyrotechnische Antriebseinheit (30) in einem nicht dargestellten Sicherheitsgurtsystem, einem Überrollbügel und/oder einem Motorhaubenaufsteller in einem Fahrzeug vorgesehen ist.

In Figur 7 sind die oben beschriebenen Festtreibstoffkörper (10) von einer Hülse (38) umgeben, welche ein zusätzliches Teil der Anzündbaugruppe (36) darstellt und als Druckbehälter beim Abbrand der Festtreibstoffkörper (10) wirkt. Es ist auch denkbar auf eine solche Hülse (38) zu verzichten; dann wären die Festtreibstoffkörper (10) lose zwischen Kolben (34) und der Anzündervorrichtung (18) gelagert, also ohne zusätzliche Einhäusung durch die Hülse (38).

Weiterhin sind in Figur 7 die oben beschriebenen Festtreibstoffkörper (10) räumlich getrennt von der Anzündervorrichtung (18) dargestellt, was jedoch nicht zwingend erforderlich ist. So ist es auch möglich, dass die Festtreibstoffkörper (10) direkt in die Anzündervorrichtung (18) integriert sind, also zusammen mit der nicht dargestellten, pyrotechnischen Ladung der Anzündervorrichtung (18) im Inneren der Anzündervorrichtung (18), entweder in homogener Mischung oder in geschichteter Form, aufgenommen sind. Weiterhin ist es hierbei auch denkbar, dass die oben beschriebenen Festtreibstoffkörper (10) selbst die nicht dargestellten ,pyrotechnische Ladung der Anzündervorrichtung (18) bilden; mit anderen Worten, dass im Inneren der Anzündervorrichtung (18) neben den oben beschriebenen Festtreibstoffkörpern (10) keine weiteren pyrotechnischen Bauteile vorliegen.

## Patentansprüche

1. Festtreibstoffkörper (10) in Form eines Presskörpers aus einem Pulver und/oder granulatförmigen Festtreibstoff, insbesondere für Gasgeneratoren und/oder pyrotechnische Antriebseinheiten eines Personen-Schutzsystems für Fahrzeuge, wobei der Festtreibstoffkörper (10) auf zumindest einer seiner Seiten zumindest eine Vertiefung (12) aufweist, **dadurch gekennzeichnet, dass** die Vertiefung (12) einen ersten Krümmungsradius in ihrem zentralen Bereich und einen zweiten Krümmungsradius in ihrem Randbereich aufweist.

2. Festtreibstoffkörper nach Anspruch 1 , **dadurch gekennzeichnet, dass** die Vertiefung (12) konkav ist und/oder einen runden, vorzugsweise kreisförmigen Querschnitt aufweist oder **dadurch gekennzeichnet, dass** die Vertiefung (12) umgekehrt domförmig ist.

3. Festtreibstoffkörper nach zumindest einem der Ansprüche 1 und 2, **dadurch gekennzeichnet, dass** die konkave Vertiefung (12) einen Durchmesser hat, welcher zwischen 50% und 100% vorzugsweise zwischen 80% und 98 %, des Durchmessers des Festtreibstoffkörpers (10) beträgt und/oder **dadurch gekennzeichnet, dass** die maximale Tiefe der konkaven Vertiefung (12) zwischen 20% und 90%, vorzugsweise zwischen 30% und 50 % der Höhe des Festtreibstoffkörpers (0) beträgt.

4. Festtreibstoffkörper nach zumindest einem der vorhergehenden Ansprüche, **dadurch gekennzeichnet, dass** der Festtreibstoffkörper (10) tablettenförmig ist und/oder eine im Wesentlichen zylindrische Grundform aufweist.

5. Festtreibstoffkörper nach Anspruch 4, **dadurch gekennzeichnet, dass** eine zentrale Vertiefung (12) an einer oder beiden Stirnseiten vorgesehen ist, insbesondere eine einzige Vertiefung (12), oder dass eine Mehrzahl von Vertiefungen (12) vorgesehen ist.

6. Festtreibstoffkörper nach zumindest einem der vorhergehenden Ansprüche, **dadurch gekennzeichnet, dass** mehrere Vertiefungen (12) an gegenüberliegenden Seiten, vorzugsweise an allen Seiten, insbesondere an den Stirnseiten des Festtreibstoffkörpers (10) angeordnet sind und/oder **dadurch gekennzeichnet, dass** die mehreren Vertiefungen (12), welche vorzugsweise einen Durchmesser kleiner als 10% des Durchmessers des Festtreibstoffkörpers (10) aufweisen, gleichmässig oder in vorbestimmten Mustern verteilt auf zumindest einer Seite des Festtreibstoffkörpers (10) angeordnet sind.

7. Festtreibstoffkörper nach zumindest einem der vorhergehenden Ansprüche, **dadurch gekennzeichnet, dass** die beiden Krümmungsradien unterschiedliche Vorzeichen haben.

8. Festtreibstoffkörper nach zumindest einem der vorhergehenden Ansprüche, **dadurch gekennzeichnet, dass** die wenigstens eine Vertiefung (12) die Oberfläche derjenigen Seite des Festtreibstoffkörpers (10), an welcher sie vorgesehen ist, um wenigstens 10%, insbesondere um wenigstens 25%, weiter insbesondere um wenigstens 35%, im Vergleich zu der Oberfläche einer (theoretisch) vertiefungsfrei ausgebildeten Seite erhöht und/oder dass die wenigstens eine Vertiefung (12) wenigstens 20% der Oberfläche der Seite, an welcher sie vorgesehen ist, bildet.

9. Festtreibstoffkörper nach zumindest einem der vorhergehenden Ansprüche, **dadurch gekennzeichnet, dass** die konkave Vertiefung (12) eine Tiefe von 1 ,2 mm bis 5,4 mm, vorzugsweise von 1 ,8 mm bis 3,0 mm aufweist.

10. Festtreibstoffkörper nach zumindest einem der vorhergehenden Ansprüche, **dadurch gekennzeichnet, dass** die konkave Vertiefung (12) einen Durchmesser von 3,0 mm bis 6,0 mm, vorzugsweise von 4,8 mm bis 5,8 mm aufweist.

11. Gasgenerator (14) mit zumindest einer Brennkammer (16), **dadurch gekennzeichnet, dass** die Brennkammer (16) im nicht aktivierten Zustand des Gasgenerators (14) mit einer Mehrzahl von Festtreibstoffkörpern (10), die gemäss zumindest einem der vorhergehenden Ansprüche ausgebildet sind, gefüllt ist, wobei vorzugsweise alle, oder im Wesentlichen alle Festtreibstoffkörper (10) im Wesentlichen gleich ausgebildet sind.

12. Gasgenerator (14) mit zumindest einer Brennkammer (16), **dadurch gekennzeichnet, dass** die Brennkammer (16) im nicht aktivierten Zustand des Gasgenerators (14) mit einer Mehrzahl von Festtreibstoffkörpern (10), die gemäss zumindest einem der vorhergehenden Ansprüche 1 bis 10 ausgebildet sind, gefüllt ist, wobei zumindest zwei unterschiedliche Formvarianten von Festtreibstoffkörpern (10) schichtartig in der Brennkammer (16) angeordnet sind.

13. Modul mit einem Gasgenerator (14) gemäss einem der Ansprüche 11 und 12 und einen vom Gasgenerator (14) aufblasbaren Gassack und eine Befestigungseinrichtung (26) zur Anbringung des Moduls, insbesondere im Innenbereich eines Fahrzeuges.

14. Pyrotechnische Antriebseinheit (30) mit einem Gehäuse (32), einem in dem Gehäuse (32) bewegbaren Kolben (34) und einer Anzündbaugruppe (36), welche eine Anzündvorrichtung (18) und eine Mehrzahl von Festtreibstoff körpern (10), die gemäss zumindest einem der vorhergehenden Ansprüche 1 bis 10 ausgebildet sind, umfasst.

## Claims

1. A solid fuel body (10) in the form of a compact of a powder and/or granular solid fuel, especially for inflators and/or pyrotechnic drive units of an occupant protection system for vehicles, wherein the solid fuel body (10) includes a recess (12) on at least one of its sides, **characterized in that** the recess (12) has a first radius of curvature in its central area and a second radius of curvature in its marginal area.

2. The solid fuel body according to claim 1, **characterized in that** the recess (12) is concave and/or has a round, preferably circular cross-section, or **characterized in that** the recess (12) is inversely dome-shaped.

3. The solid fuel body according to at least one of the claims 1 and 2, **characterized in that** the concave recess (12) has a diameter which is between 50% and 100%, preferably between 80% and 98%, of the diameter of the solid fuel body (10), and/or **characterized in that** the maximum depth of the concave recess (12) is between 20% and 90%, preferably between 30% and 50% of the height of the solid fuel body (10).

4. The solid fuel body according to at least one of the preceding claims, **characterized in that** the solid fuel body (10) is tablet-shaped and/or has a substantially cylindrical basic shape.

5. The solid fuel body according to claim 4, **characterized in that** a central recess (12) is provided on one or both end faces, especially one single recess (12), or that a plurality of recesses (12) is provided.

6. The solid fuel body according to at least one of the preceding claims, **characterized in that** plural recesses (12) are arranged on opposite sides, preferably on all sides, especially on the end faces of the solid fuel body (10), and/or **characterized in that** the plural recesses (12) which preferably have a diameter smaller than 10% of the diameter of the solid fuel body (10) are arranged to be distributed uniformly or in predetermined patterns on at least one side of the solid fuel body (10).

7. The solid fuel body according to at least one of the preceding claims, **characterized in that** the two radii of curvature have different signs.

8. The solid fuel body according to at least one of the preceding claims, **characterized in that** the at least one recess (12) forms the surface of the side of the solid fuel body (10) on which it is provided while being elevated by at least 10%, especially by at least 25%, further especially by at least 35%, compared to the surface of a (theoretically) recess-free side and/or that the at least one recess (12) forms at least 20% of the surface of the side on which it is provided.

9. The solid fuel body according to at least one of the preceding claims, **characterized in that** the concave recess (12) has a depth of 1.2 mm to 5.4 mm, preferably of 1.8 mm to 3.0 mm.

10. The solid fuel body according to at least one of the preceding claims, **characterized in that** the concave recess (12) has a diameter of from 3.0 mm to 6.0 mm, preferably from 4.8 mm to 5.8 mm.

11. An inflator (14) comprising at least one combustion chamber (16), **characterized in that** in the non-activated condition of the inflator (14) the combustion chamber (16) is filled with a plurality of solid fuel bodies (10) configured in accordance with at least one of the preceding claims, wherein preferably all or substantially all solid fuel bodies (10) are formed to be substantially equal.

12. The inflator (14) comprising at least one combustion chamber (16), **characterized in that** in the non-activated condition of the inflator (14) the combustion chamber (16) is filled with a plurality of solid fuel bodies (10) configured in accordance with at least one of the preceding claims 1 to 10, wherein at least two different form variants of solid fuel bodies (10) are arranged in layers in the combustion chamber (16).

13. A module comprising an inflator (14) according to any one of the claims 11 and 12 and an airbag inflatable by the inflator (14) and a fastening means (26) for arranging the module, especially in the interior of a vehicle.

14. A pyrotechnic drive unit (30) comprising a housing (32), a piston (34) movable in the housing (32) and an ignition assembly (36) which includes an ignition device (18) and a plurality of solid fuel bodies (10) configured in accordance with at least one of the preceding claims 1 to 10.

## Revendications

1. Bloc de propergol solide (10) en forme d'un bloc pressé à partir de propergol pulvérulent et/ou sous forme de granulés, en particulier pour un générateur de gaz et/ou un actionneur pyrotechnique d'un système de protection d'occupant de véhicule, pour lequel le bloc de propergol solide (10) possède au moins un creux (12) sur au moins une de ses faces, **caractérisé en ce que** le creux (12) possède un premier rayon de courbure dans sa zone centrale et un deuxième rayon de courbure dans la zone de bordure.

2. Bloc de propergol solide selon la revendication 1, **caractérisé en ce que** le creux (12) est concave et/ou possède une section transversale ronde, de préférence en forme circulaire ou **caractérisé en ce que** le creux (12) est en forme de dôme inversé.

3. Bloc de propergol solide selon au moins l'une des revendications 1 et 2, **caractérisé en ce que** le creux (12) concave a un diamètre compris entre 50% et 100% du diamètre du bloc de propergol solide (12), de préférence entre 80% et 98% et/ou **caractérisé en ce que** la profondeur maximale du creux (12) concave est comprise entre 20% et 90% de la hauteur du bloc de propergol solide (10), de préférence entre 30% et 50%.

4. Bloc de propergol solide selon au moins l'une des revendications précédentes, **caractérisé en ce que** le bloc de propergol solide (10) est en forme de comprimé et/ou possède une forme essentiellement cylindrique.

5. Bloc de propergol solide selon la revendication 4, **caractérisé en ce qu'**est prévu un creux central (12) sur une ou sur les deux faces frontales, en particulier un creux (12) unique, ou qu'est prévu une pluralité de creux (12).

6. Bloc de propergol solide selon au moins l'une des revendications précédentes, **caractérisé en ce que** plusieurs creux (12) sont disposés sur les faces opposées, de préférence sur toutes les faces, en particulier sur les faces frontales du bloc de propergol solide (10) et/ou **caractérisé en ce que** les nombreux creux (12) possèdent de préférence un diamètre plus petit que 10% du diamètre du bloc de propergol solide (10), distribués uniformément ou en motifs prédéterminés et disposés au moins sur une des faces du bloc de propergol solide (10).

7. Bloc de propergol solide selon au moins l'une des revendications précédentes, **caractérisé en ce que** les deux de rayons de courbure ont des signes différents.

8. Bloc de propergol solide selon au moins l'une des revendications précédentes, **caractérisé en ce qu'**un creux (12) au moins augmente la surface de la face du bloc de propergol solide (10), sur laquelle il est prévu, d'au moins 10%, en particulier au moins 25%, plus particulièrement au moins 35%, en regard d'une surface (théorique) réalisée sans creux et/ou qu'un creux (12) au moins représente au moins 20% de la surface de la face sur laquelle il est prévu.

9. Bloc de propergol solide selon au moins l'une des revendications précédentes, **caractérisé en ce que** le creux concave (12) possède une profondeur de 1,2 mm jusqu'à 5,4 mm, de préférence de 1,8 mm jusqu'à 3,0 mm.

10. Bloc de propergol solide selon l'une des revendications précédentes, **caractérisé en ce que** le creux (12) concave possède un diamètre compris entre 3,0 et 6,0 mm, de préférence entre 4,8 mm et 5,8 mm.

11. Générateur de gaz (14) avec au moins un chambre de combustion (16), **caractérisé en ce que** la chambre de combustion (16) dans un état inactivé du générateur de gaz (14) est remplie par une pluralité de blocs de propergol solide (10), dont les dimensions sont définies suivant au moins l'une des revendications précédentes, pour lequel tous, ou essentiellement tous les blocs de propergol solide (10) sont principalement identiques.

12. Générateur de gaz (14) avec au moins une chambre de combustion (16), **caractérisé en ce que** la chambre de combustion (16) dans un état inactivé du générateur de gaz (14) est remplie par une pluralité de blocs de propergol solide (10), dont les dimensions sont définies suivant au moins l'une des revendications 1 à 10, dans lequel au moins deux variantes de formes différentes de blocs de propergol solide sont disposées en couches dans la chambre de combustion (16).

13. Module avec un générateur de gaz (14) selon l'une des revendications 11 et 12 et un coussin gonflable par un générateur de gaz (14) et un dispositif de fixation (26) pour la fixation du module, en particulier à l'intérieur d'un véhicule.

14. Actionneur pyrotechnique (30) avec un corps (32), actionneur dont le corps (32) contient un piston mobile (34) et un ensemble d'allumage (36), lequel comprend un dispositif d'allumage (18) et une pluralité de blocs de propergol solide (10), ces derniers étant définis selon l'une des revendications 1 à 10 précédentes.
